# EUROPEAN PATENT SPECIFICATION

(11) **EP 4 306 738 B1**
(45) Date of publication and mention of the grant of the patent: **12.08.2026**
(21) Application number: 22787834.5
(22) Date of filing: 14.02.2022
(51) Int. Cl.: E04C 2/20, B29C 65/08, B29C 65/16, B29C 69/00, B29C 53/24, B29C 65/00, B29C 65/14, B29L 31/00, B29L 24/00

(54) **PANEL MANUFACTURING DEVICE, PANEL MANUFACTURING METHOD, AND PANEL**
PLATTENHERSTELLUNGSVORRICHTUNG, PLATTENHERSTELLUNGSVERFAHREN UND PLATTE
DISPOSITIF DE FABRICATION DE PANNEAU, PROCÉDÉ DE FABRICATION DE PANNEAU ET PANNEAU

(30) Priority: 16.04.2021 JP 2021069992
(43) Date of publication of application: 17.01.2024
(73) Proprietor: Mitsubishi Heavy Industries, Ltd., Tokyo 100-8332 (JP); Mitsubishi Heavy Industries Machinery Systems, Ltd., Kobe-shi, Hyogo 652-8585 (JP)
(72) Inventor: KOYAMA, Takayuki, Tokyo 100-8332 (JP); TAKAGI, Kiyoka, Tokyo 100-8332 (JP); SENNYU, Katsuya, Kobe-shi, Hyogo 652-8585 (JP); TAKAKUWA, Yoshinao, Kobe-shi, Hyogo 652-8585 (JP); MIYAKE, Takayuki, Kobe-shi, Hyogo 652-8585 (JP); AIKAWA, Katsuhide, Kobe-shi, Hyogo 652-8585 (JP)
(74) Representative: Hoffmann Eitle
(86) International application number: PCT/JP2022/005668
(87) International publication number: WO 2022/219906

(56) References cited:
- JP-A- 2018 535 846
- JP-A- H08 156 087
- JP-A- H08 156 087
- US-A- 4 132 581
- US-A- 5 114 509

## Description

### Technical Field

The present disclosure relates to a panel manufacturing device, a panel manufacturing method, and a panel.

### Background Art

In the related art, there is known a method of manufacturing a composite sheet in which a first sheet and a second sheet that are overlapped with each other are fused by ultrasonic vibration (refer to, for example, PTL 1). The first sheet is formed into a corrugated shape by a first roll and is fused to the second sheet having a plate shape.

### Citation List

### Patent Literature

[PTL 1] Japanese Unexamined Patent Application Publication No. 2019-188802
Further related art may be found in US 4 132 581 A, which describes a method for the fabrication of a plastic board, in JP H08 156087 A, which describes a corrugate molding machine, a panel for a molding machine and a honeycomb core of fiber-reinforced plastic, and in US 5 114 509 A, which describes a starch adhesive bonding.

### Summary of Invention

### Technical Problem

An example of a panel such as the composite sheet includes a so-called sandwich panel in which a corrugated core member is disposed between two faceplates. In PTL 1, the core member serving as the first sheet is fused with the faceplate on one side serving as the second sheet to manufacture the composite sheet. On the other hand, there is no description or suggestion in PTL 1 regarding the fusion between the panel such as the composite sheet and the faceplate on the other side, and there is room for improvement.

An object of the present disclosure is to provide a panel manufacturing device, a panel manufacturing method, and a panel capable of suitably manufacturing a panel composed of two faceplates and a core member.

### Solution to Problem

A panel manufacturing device of the present disclosure includes a transfer part that transfers, in a transfer direction, a panel having a core member that includes a thermoplastic resin and is formed in a corrugated shape and a first faceplate that includes a thermoplastic resin, is formed in a plate shape, and is joined to a surface on one side of the core member, a supply part that supplies, toward a surface on the other side of the core member, a second faceplate that includes a thermoplastic resin and is formed in a plate shape, and a joining part that joins the core member and the second faceplate to form a joined part, in which the first faceplate has a plurality of through-holes formed through the first faceplate for access to the core member, and the joining part forms the joined part via the through-hole of the first faceplate.

A panel manufacturing method according to the present disclosure includes a step of transferring, in a transfer direction, a panel having a core member that includes a thermoplastic resin and is formed in a corrugated shape and a first faceplate that includes a thermoplastic resin, is formed in a plate shape, and is joined to a surface on one side of the core member, a step of supplying, toward a surface on the other side of the core member, a second faceplate that includes a thermoplastic resin and is formed in a plate shape, and a step of joining the core member and the second faceplate to form a joined part, in which the first faceplate has a plurality of through-holes formed through the first faceplate for access to the core member, and the joined part is formed via the through-hole of the first faceplate in the step of forming the joined part.

A panel of the present disclosure includes a core member that includes a thermoplastic resin and is formed in a corrugated shape, a first faceplate that includes a thermoplastic resin, is formed in a plate shape, and is joined to a surface on one side of the core member, and a second faceplate that includes a thermoplastic resin, is formed in a plate shape, and is joined to a surface on the other side of the core member, in which the first faceplate has a plurality of through-holes formed through the first faceplate for access to the core member, and the second faceplate has a plurality of joined parts that are provided in correspondence with the plurality of through-holes and are formed by the joining of the second faceplate to the core member.

### Advantageous Effects of Invention

According to the present disclosure, it is possible to suitably manufacture a panel composed of two faceplates and a core member.

### Brief Description of Drawings

Fig. 1 is a perspective view of a panel according to a first embodiment.
Fig. 2 is a schematic configuration diagram representing a panel manufacturing device according to the first embodiment.
Fig. 3 is a schematic configuration diagram representing a single facer.
Fig. 4 is a schematic configuration diagram representing a double facer.
Fig. 5 is a schematic configuration diagram representing a panel manufacturing device according to a second embodiment.
Fig. 6 is a schematic configuration diagram representing a panel manufacturing device according to a third embodiment.
Fig. 7 is a schematic configuration diagram representing a panel manufacturing device according to a fourth embodiment.
Fig. 8 is an explanatory diagram representing an example of a welding part.
Fig. 9 is an explanatory diagram representing an example of the welding part.

### Description of Embodiments

Hereinafter, an embodiment according to the present disclosure will be described in detail based on drawings. The invention is not limited to the embodiment. Further, components in the following embodiment include components that can be easily replaced by those skilled in the art or components that are substantially the same. Furthermore, the components described below can be combined as appropriate, and in a case where there are a plurality of embodiments, the respective embodiments can also be combined.

### [First Embodiment]

In a panel manufacturing device 10 according to a first embodiment, faceplates 6 and 7 having a plate shape are joined to both surfaces of a core member 5 having a corrugated shape to manufacture a sheet-shaped sandwich panel (hereinafter, simply referred to as panel 1). Prior to the description of the panel manufacturing device 10, the panel 1 will be described.

### (Panel)

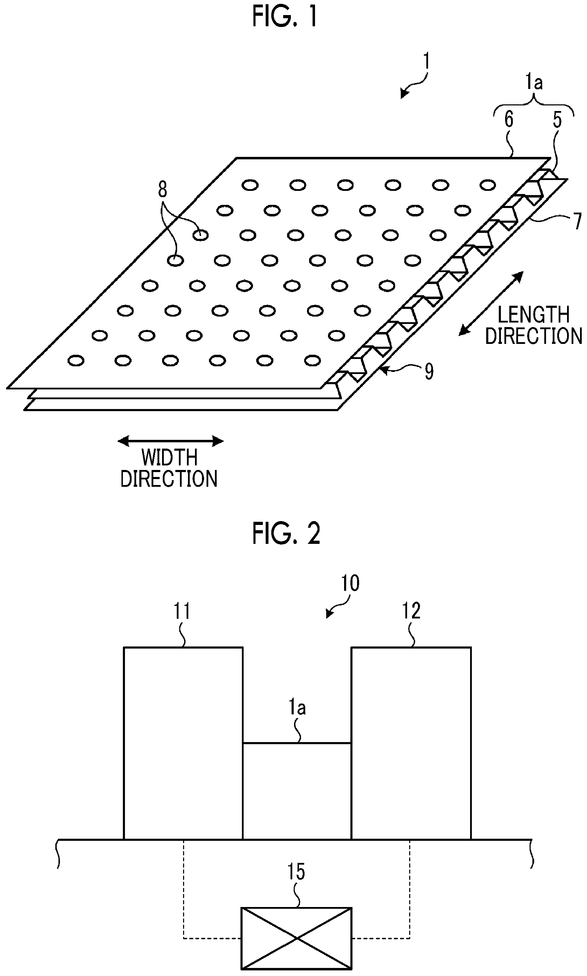

Fig. 1 is a perspective view of the panel according to the first embodiment. As shown in Fig. 1, the panel 1 is a sheet-shaped panel that is a flat plate extending in a width direction and a length direction. The length direction of the panel 1 is a transfer direction in the panel manufacturing device 10 described below. The panel 1 includes a core member 5, a first faceplate 6, and a second faceplate 7. The core member 5, the first faceplate 6, and the second faceplate 7 are configured to include a thermoplastic resin. The core member 5, the first faceplate 6, and the second faceplate 7 may be a composite material containing a reinforcing fiber in addition to the thermoplastic resin. Further, the thermoplastic resins used in the core member 5, the first faceplate 6, and the second faceplate 7 may be different types of thermoplastic resins.

The core member 5 is formed in the corrugated shape. Specifically, the core member 5 has a wave shape in which peaks and valleys are alternately and continuously formed in the length direction, and is formed such that tops of the peaks and bottom portions of the valleys extend in the width direction. The corrugated shape is not particularly limited to the above-mentioned shape, and may be, for example, an embossed shape in which undulations are formed in a staggered manner. That is, any shape may be employed as long as the shape can be continuously formed in the transfer direction in the panel manufacturing device 10 described below.

The first faceplate 6 is joined to a surface on one side (upper side in Fig. 1) of the core member 5. The first faceplate 6 is formed in a plate shape. The first faceplate 6 is joined to the tops of the peaks of the core member 5, while being separated from the bottom portions of the valleys of the core member 5. The first faceplate 6 has a plurality of through-holes 8. The plurality of through-holes 8 are formed through and are holes for accessing the core member 5 from the outside via the first faceplate 6. The through-hole 8 is, for example, a circular opening (round hole). The through-hole 8 may be a rectangular opening (slit) and is not particularly limited. The plurality of through-holes 8 are arranged in a grid pattern in the length direction and the width direction. Specifically, the plurality of through-holes 8 are provided side by side along the width direction at a predetermined spacing. Further, the plurality of through-holes 8 are provided at positions facing the bottom portions of the valleys of the core member 5 in the length direction.

The second faceplate 7 is joined to a surface on the other side (lower side in Fig. 1) of the core member 5. The second faceplate 7 is formed in a plate shape. The second faceplate 7 is joined to the bottom portions of the valleys of the core member 5, while being separated from the tops of the peaks of the core member 5. The second faceplate 7 is provided with a welding part 9 as a joined part, which is a portion to be joined to the core member 5.

In the panel 1, the core member 5 and the first faceplate 6 are first joined to form a panel 1a, and then the panel 1a and the second faceplate 7 are joined to form the sandwich panel shown in Fig. 1.

Here, the plurality of through-holes 8 provided in the panel 1 may be holes that add sound absorbing performance to the panel 1. That is, the plurality of through-holes 8 allow the sound incident on the panel 1 to pass toward the inside of the panel 1 and reflect the sound inside the panel 1 to absorb the sound. Further, the plurality of through-holes 8 may make the rigidity of the first faceplate 6 lower than the rigidity of the second faceplate 7. In a case where the rigidity of the first faceplate 6 before the through-hole 8 is provided is the same as the rigidity of the second faceplate 7, the providing of the plurality of through-holes 8 results in the decrease in the rigidity of the first faceplate 6. Therefore, in a case where the panel 1 is deformed, the panel 1 is easily deformed and processed with a first faceplate 6 side as a valley fold and a second faceplate 7 side as a mountain fold.

### (Panel Manufacturing Device)

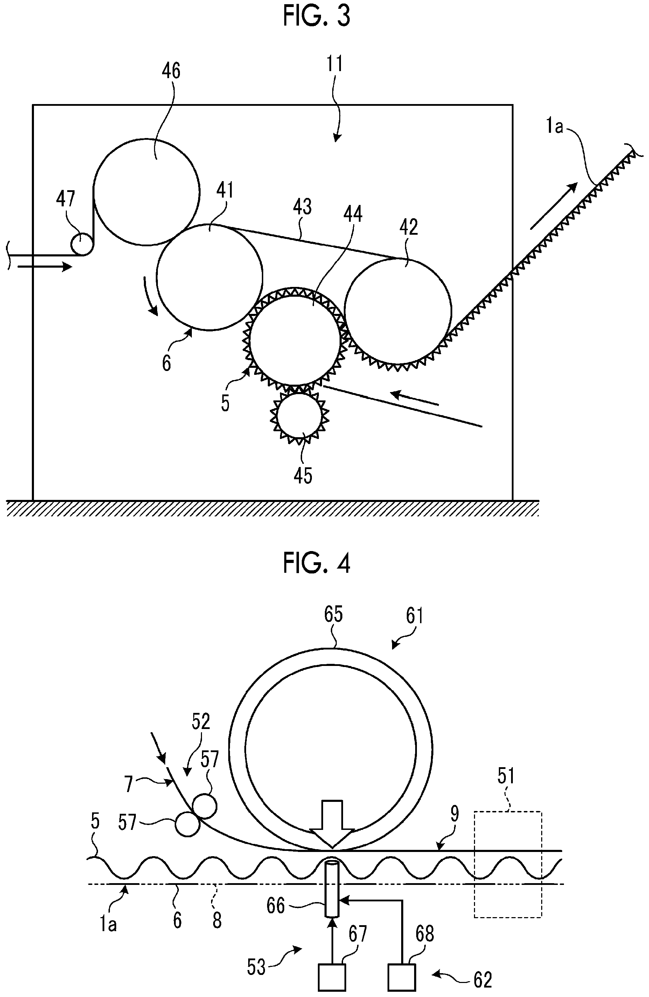

Next, the panel manufacturing device 10 will be described with reference to Figs. 2 to 4. Fig. 2 is a schematic configuration diagram representing a panel manufacturing device according to the first embodiment. Fig. 3 is a schematic configuration diagram representing a single facer. Fig. 4 is a schematic configuration diagram representing a double facer. As shown in Fig. 2, the panel manufacturing device 10 includes a single facer 11, a double facer 12, and a control device 15.

### (Single Facer)

The single facer 11 is a device that joins the core member 5 and the first faceplate 6 to form the panel 1a. The single facer 11 includes a belt roll 41, a tension roll 42, a pressurizing belt 43, an upper corrugating roll 44, and a lower corrugating roll 45.

The belt roll 41 can be driven and rotated by a drive device (not shown). The tension roll 42 is rotatably supported at a predetermined spacing from the belt roll 41. The pressurizing belt 43 is an endless belt and is wound around the belt roll 41 and the tension roll 42. The upper corrugating roll 44 can be driven and rotated by a drive device (not shown), and the outer peripheral surface thereof is formed in a wave shape. The upper corrugating roll 44 is disposed below the pressurizing belt 43 in a vertical direction between the belt roll 41 and the tension roll 42, and the wave-shaped outer peripheral surface comes into contact with a lower surface of the pressurizing belt 43 in a pressurized state. As in the upper corrugating roll 44, the lower corrugating roll 45 has the outer peripheral surface formed in a wave shape and is engaged with the outer peripheral surface of the upper corrugating roll 44 below the upper corrugating roll 44 in a vertical direction.

The first faceplate 6 supplied to the single facer 11 is wound around a guide roller 47 on an upstream side and then wound around a guide roller 46 on a downstream side. Thereafter, together with the pressurizing belt 43 guided by the belt roll 41, the first faceplate 6 is sandwiched between the pressurizing belt 43 and the upper corrugating roll 44 and is pressurized. On the other hand, the plate-shaped core member 5 before shaping is shaped into a wave shape at the engaging portion between the upper corrugating roll 44 and the lower corrugating roll 45, and then guided by the upper corrugating roll 44 to be supplied between the pressurizing belt 43 and the upper corrugating roll 44.

Further, the single facer 11 includes a joining device (not shown) that joins the first faceplate 6 and the core member 5. The joining device melts the top of the peak of the core member 5 by heating. In the single facer 11, the core member 5 whose top of the peak is melted is transferred between the pressurizing belt 43 and the upper corrugating roll 44 and is pressurized, together with the first faceplate 6, between the pressurizing belt 43 and the upper corrugating roll 44 to join the core member 5 and the first faceplate 6. The single facer 11 joins the core member 5 and the first faceplate 6 to form the panel 1a and transfers the formed panel 1a toward the double facer 12.

### (Double Facer)

The double facer 12 is a device that joins the panel 1a and the second faceplate 7 to form the panel 1 to be the sandwich panel. The double facer 12 includes a transfer part 51, a supply part 52, and a joining part 53.

The transfer part 51 is a device that transfers the panel 1a in the transfer direction. The transfer part 51 sandwiches, from both sides, the panel 1 after the second faceplate 7 is joined to the panel 1a and delivers the panel 1 in the transfer direction to transfer the panel 1a. The transfer part 51 may be configured by using a plurality of transfer rollers or may be configured by using an endless belt such as the pressurizing belt 43 of the single facer 11.

The supply part 52 is a device that supplies the second faceplate 7 toward the surface on the other side of the core member 5 of the panel 1a. The supply part 52 has a pair of transfer rollers 57 that sandwiches the second faceplate 7 and delivers the second faceplate 7 toward the joining part 53.

The joining part 53 joins the core member 5 and the second faceplate 7 to form the welding part 9. The joining part 53 forms the welding part 9 via the plurality of through-holes 8 provided in the first faceplate 6. The joining part 53 includes a pressurizing part 61 and a heating part 62.

The pressurizing part 61 is a device that pressurizes the welding part 9 and includes a receiving roller (receiving member) 65, a pressurizing rod (pressurizing member) 66, and a rod drive unit 67. The receiving roller 65 is in rolling contact with the outer surface of the second faceplate 7 and serves as a roller that receives the pressurization from the pressurizing rod 66. The receiving roller 65 may be heated by a heating source to contribute to the joining between the core member 5 and the second faceplate 7. The pressurizing rod 66 is a rod-shaped member that is inserted into the through-hole 8 that is the circular opening. The pressurizing rod 66 sandwiches and pressurizes the core member 5 and the second faceplate 7 between the pressurizing rod 66 and the receiving roller 65. The pressurizing rod 66 can freely move back and forth between a pressing position where the pressurizing rod 66 sandwiches the core member 5 and the second faceplate 7 and an avoiding position where the pressurizing rod 66 separates from the through-hole 8 and avoids physical interference with the panel 1a. A plurality of the pressurizing rods 66 are provided over the width direction and are provided in correspondence with the plurality of through-holes 8 provided side by side in the width direction. The rod drive unit 67 is a drive unit that moves the pressurizing rod 66 back and forth between the pressing position and the avoiding position. For example, a cylinder is applied to the rod drive unit 67. The rod drive unit 67 is not particularly limited to the cylinder and may be any actuator. The rod drive unit 67 is connected to the control device 15, and the control device 15 controls the drive of the rod drive unit 67 to control the back and forth movement of the pressurizing rod 66.

The heating part 62 is a device (vibration heating part) that imparts ultrasonic vibration to the pressurizing rod 66 to perform ultrasonic welding. The heating part 62 includes the pressurizing rod 66 serving as a vibrator and a vibration imparting part 68. The vibration imparting part 68 imparts the ultrasonic vibration to the pressurizing rod 66 that has moved to the pressing position. In a case where the vibration imparting part 68 imparts the vibration to the pressurizing rod 66, the core member 5 and the second faceplate 7, which are sandwiched between the pressurizing rod 66 and the receiving roller 65, are ultrasonically welded. The vibration imparting part 68 is connected to the control device 15, and the control device 15 controls the vibration of the vibration imparting part 68 to control the ultrasonic welding by the pressurizing rod 66.

The panel 1a transferred from the single facer 11 to the double facer 12 is pulled between the receiving roller 65 and the pressurizing rod 66 by the transfer part 51. Further, the second faceplate 7 supplied to the double facer 12 is supplied between the receiving roller 65 and the pressurizing rod 66 by the transfer roller 57. In this case, the second faceplate 7 is supplied to the surface on the other side of the core member 5 of the panel 1a.

In the double facer 12, the rod drive unit 67 moves the pressurizing rod 66 from the avoiding position to the pressing position with respect to the panel 1a and the second faceplate 7 supplied between the receiving roller 65 and the pressurizing rod 66. The pressurizing rod 66 is inserted through the through-hole 8 and accesses the core member 5 to pressurize the bottom portion of the valley of the core member 5 of the panel 1a and the second faceplate 7. Further, in the double facer 12, the vibration imparting part 68 imparts the ultrasonic vibration to the pressurizing rod 66 in a state where the pressurizing rod 66 is positioned at the pressing position, and thus the bottom portion of the valley of the core member 5 of the panel 1a and the second faceplate 7 are ultrasonically welded by the ultrasonic welding.

The double facer 12 discharges the panel 1 obtained by joining the panel 1a and the second faceplate 7. The discharged panel 1 may be discharged as it is or may be cut into a single-wafer sheet, and is not particularly limited.

The control device 15 is connected to the single facer 11 and the double facer 12 and controls the drive thereof. Specifically, in the double facer 12, the control device 15 is connected to the rod drive unit 67 and the vibration imparting part 68 and controls the pressurization operation by the pressurizing rod 66 and the ultrasonic welding by the pressurizing rod 66.

Next, a panel manufacturing method of manufacturing the panel 1 using the panel manufacturing device 10 will be described. As shown in Fig. 3, in the single facer 11, the panel manufacturing device 10 shapes the core member 5 having the corrugated shape and joins the shaped core member 5 and the first faceplate 6 to form the panel 1a. The panel manufacturing device 10 transfers the formed panel 1a from the single facer 11 toward the double facer 12.

As shown in Fig. 4, in the panel manufacturing device 10, the transfer part 51 transfers the panel 1a in the transfer direction (length direction) in the double facer 12 to supply the panel 1a toward the joining part 53. Further, in the panel manufacturing device 10, the transfer roller 57 of the supply part 52 supplies the second faceplate 7 toward the surface on the other side of the core member 5. In the panel manufacturing device 10, in a case where the panel 1a and the second faceplate 7 are supplied to the joining part 53, the joining part 53 joins the panel 1a and the second faceplate 7 to form the welding part 9. Specifically, in the panel manufacturing device 10, the pressurizing rod 66 of the pressurizing part 61 of the joining part 53 is inserted into the through-hole 8 of the first faceplate 6. In the panel manufacturing device 10, the rod drive unit 67 moves the pressurizing rod 66 to the pressing position to pressurize the core member 5 and the second faceplate 7 between the pressurizing rod 66 and the receiving roller 65. Further, in the panel manufacturing device 10, the vibration imparting part 68 imparts the ultrasonic vibration to the pressurizing rod 66 in the pressurized state to perform the ultrasonic welding.

### [Second Embodiment]

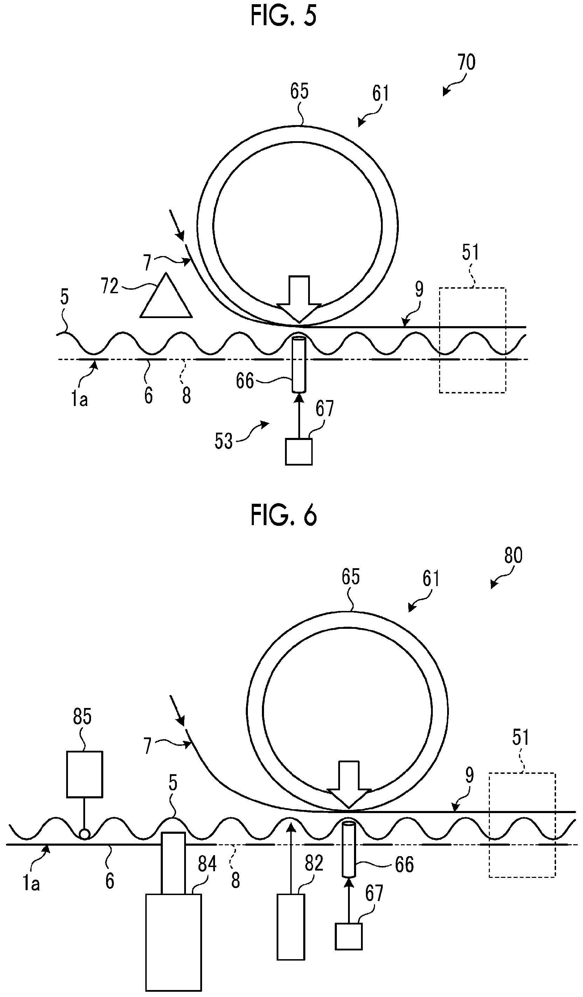

Next, a panel manufacturing device 70 according to a second embodiment will be described with reference to Fig. 5. In the second embodiment, in order to avoid repeated description, elements different from those in the first embodiment will be described, and description will be made by assigning the same reference numerals to elements having configurations the same as those in the first embodiment. Fig. 5 is a schematic configuration diagram representing a panel manufacturing device according to the second embodiment.

### (Panel Manufacturing Device)

As shown in Fig. 5, the panel manufacturing device 70 of the second embodiment is provided with a heating part 72 instead of the heating part 62 (vibration imparting part 68) in the panel manufacturing device 10 of the first embodiment. In the first embodiment, the pressurizing part 61 and the heating part 62 of the joining part 53 are integrated. However, in the second embodiment, the pressurizing part 61 and the heating part 72 of the joining part 53 are separate bodies.

The heating part 72 heats a surface on which the core member 5 and the second faceplate 7 face each other to raise the temperature to a temperature at which heat welding is possible. Specifically, the heating part 72 is, for example, a heating heater, a laser, or a heating lamp, and is provided at a position on an upstream side in the transfer direction of the receiving roller 65 and the pressurizing rod 66. Further, the heating part 72 is provided in a space formed between the core member 5 and the second faceplate 7 and heats the surface on the other side of the core member 5 and the surface of the second faceplate 7 facing the core member 5.

The core member 5 of the panel 1a and the second faceplate 7, which are heated by the heating part 72, are joined by being pressurized by the pressurizing rod 66.

### [Third Embodiment]

Next, a panel manufacturing device 80 according to a third embodiment will be described with reference to Fig. 6. Further, even in the third embodiment, in order to avoid duplicate description, the parts different from the first and second embodiments will be described, and the parts having the same configuration as those of the first and second embodiments will be described with the same reference numerals. Fig. 6 is a schematic configuration diagram representing a panel manufacturing device according to the third embodiment.

### (Panel Manufacturing Device)

As shown in Fig. 6, the panel manufacturing device 80 of the third embodiment is provided with a heating part 82 instead of the heating part 62 (vibration imparting part 68) in the panel manufacturing device 10 of the first embodiment. In the first embodiment, the pressurizing part 61 and the heating part 62 of the joining part 53 are integrated. However, in the third embodiment as in the second embodiment, the pressurizing part 61 and the heating part 82 of the joining part 53 are separate bodies. Further, the panel manufacturing device 80 further includes a hole processing part 84 and a shape detecting unit 85.

The heating part 82 is a laser irradiation part that emits the laser from a side of the core member 5 via the through-hole 8 of the first faceplate 6 to heat the bottom portion of the valley of the core member 5. Specifically, the heating part 82 is provided at a position on the upstream side in the transfer direction of the receiving roller 65 and the pressurizing rod 66, and is provided on the first faceplate 6 side. The heating part 82 emits the laser to pass through the through-hole 8 to heat the bottom portion of the valley of the core member 5 and heat the welding portion with the second faceplate 7.

The core member 5 of the panel 1a and the second faceplate 7, which are heated by the heating part 82, are joined by being pressurized by the pressurizing rod 66.

The hole processing part 84 is a processing device that forms the plurality of through-holes 8 in the first faceplate 6 and is, for example, a punching drill. The hole processing part 84 is provided at a position on an upstream side in the transfer direction of the heating part 82 and is provided on the first faceplate 6 side. The hole processing part 84 forms the through-hole 8 through the portion of the first faceplate 6 facing the bottom portion of the valley of the core member 5.

The shape detecting unit 85 is a sensor that detects the corrugated shape of the core member 5. The shape detecting unit 85 is provided at a position on an upstream side in the transfer direction of the hole processing part 84 and is provided on a core member 5 side. The shape detecting unit 85 is, for example, a measurement device that is in contact with the core member 5 to mechanically measure the shape. The shape detecting unit 85 may measure the shape by using a laser displacement sensor or may measure the shape by capturing an image, and is not particularly limited. The shape detecting unit 85 is connected to the control device 15 and outputs a measurement result of the corrugated shape of the core member 5 to the control device 15.

The control device 15 controls the hole processing part 84, the heating part 82, and the pressurizing part 61 based on the shape of the core member 5 acquired from the shape detecting unit 85. Specifically, the control device 15 controls the hole processing part 84 such that a position of the through-hole 8 formed by the hole processing part 84 faces the bottom portion of the valley of the core member 5, based on the shape of the core member 5. Further, the control device 15 controls the heating part 82 such that a position heated by the heating part 82 is the bottom portion of the valley of the core member 5, based on the shape of the core member 5. Further, the control device 15 controls the pressurizing part 61 such that a position pressurized by the pressurizing part 61 is the bottom portion of the valley of the core member 5, based on the shape of the core member 5.

In the third embodiment, the pressurizing part 61, the heating part 82, and the hole processing part 84 are separate bodies, but a configuration in which the above parts are integrated may be used. That is, the joining part 53 may be configured to function as the pressurizing part 61, the heating part 82, and the hole processing part 84, and to be capable of performing the hole processing, the pressurization, and the heating in one operation.

Further, the hole processing part 84 and the shape detecting unit 85 of the third embodiment are applicable to the first embodiment and the second embodiment. That is, in the first embodiment or the second embodiment, the hole processing part 84 and the shape detecting unit 85 are provided at a position on an upstream side in the transfer direction of the joining part 53 in the double facer 12. The panel 1a is formed by using the first faceplate 6 having no through-hole 8 in the single facer 11, the hole processing part 84 and the shape detecting unit 85 form the plurality of through-holes 8 in the double facer 12, and then the panel 1a and the second faceplate 7 are joined to each other by the joining part 53 to form the panel 1. In this case, the joining part 53 may control the pressurizing part 61 based on the shape of the core member 5 acquired from the shape detecting unit 85. Note that only the shape detecting unit 85 of the third embodiment may be applied to the first and second embodiments. In this case, the pressurizing part 61 may be controlled based on the shape of the core member 5 acquired from the shape detecting unit 85.

### [Fourth Embodiment]

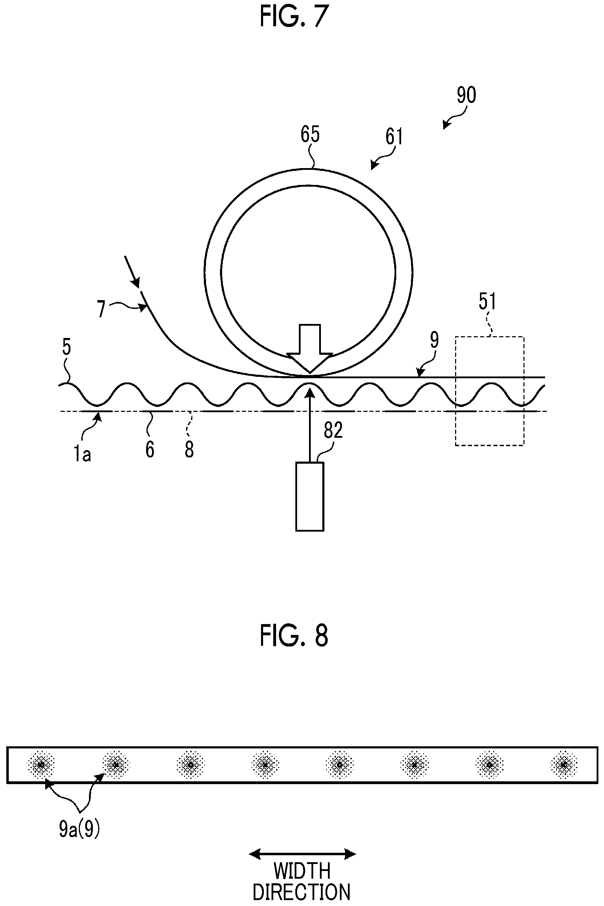

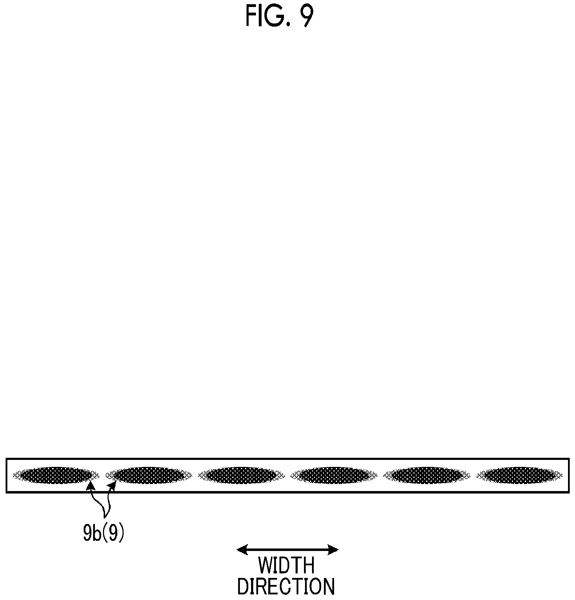

Next, a panel manufacturing device 90 according to a fourth embodiment will be described with reference to Figs. 7 to 9. In the fourth embodiment, portions different from those in the first to third embodiments will be described in order to avoid redundant description, and portions having the same configurations as in the first to third embodiments will be described with the same reference numerals applied thereto. Fig. 7 is a schematic configuration diagram representing a panel manufacturing device according to the fourth embodiment. Fig. 8 and Fig. 9 are explanatory diagrams representing examples of the welding part.

As shown in Fig. 7, in the panel manufacturing device 90 of the fourth embodiment, the pressurizing rod 66 of the pressurizing part 61 in the panel manufacturing device 10 of the first embodiment is omitted, and the heating part 82 of the third embodiment is provided instead of the pressurizing rod 66. That is, the panel manufacturing device 90 of the fourth embodiment has a device configuration in which the core member 5 and the second faceplate 7 can be sufficiently joined by pressurization by the receiving roller 65.

The heating part 82 is a laser irradiation part that emits the laser from a side of the core member 5 via the through-hole 8 of the first faceplate 6 to heat the bottom portion of the valley of the core member 5. Specifically, the heating part 82 is provided at a position facing the receiving roller 65 and is provided on the first faceplate 6 side. The heating part 82 emits the laser to pass through the through-hole 8 to heat the bottom portion of the valley of the core member 5 and heat the welding portion with the second faceplate 7.

The core member 5 of the panel 1a and the second faceplate 7, which are heated by the heating part 82, are joined by being pressurized by the receiving roller 65.

An example of the welding part 9 formed by the heating part 82 will be described with reference to Figs. 8 and 9. In Figs. 8 and 9, a left-right direction thereof is the width direction of the panel 1. The welding part 9 shown in Fig. 8 is a circular spot welding part formed by the laser irradiation to correspond to the plurality of through-holes 8 that is the circular opening. The welding part 9 shown in Fig. 9 is a wide welding part continuous in the width direction. In Fig. 9, the welding part shown in Fig. 9 may be formed by diffusing the laser in the width direction, or the welding part shown in Fig. 9 may be formed by forming the plurality of through-holes 8 as a slit opening.

In the first to fourth embodiments, the core member 5, the first faceplate 6, and the second faceplate 7, which have a continuous sheet shape, are continuously supplied. However, the core member 5, the first faceplate 6, and the second faceplate 7 may be intermittently supplied as single wafers.

Further, in the first to third embodiments, in the pressurizing part 61, the pressurizing rod 66 is moved back and forth with respect to the receiving roller 65, but the configuration is not particularly limited. For example, in the second embodiment or the third embodiment in which the pressurizing part 61 is a separate body, a pressurizing roller may be configured in which a plurality of pressurizing rods 66 are provided on an outer peripheral surface in a protruded manner. That is, with rotation of the pressurizing roller, the plurality of pressurizing rods 66 are inserted into the plurality of through-holes 8 to sandwich and pressurize the core member 5 and the second faceplate 7 between the pressurizing rods 66 and the receiving roller 65. Thereafter, with further rotation of the pressurizing roller, the plurality of pressurizing rods 66 after the pressurization may be retracted from the plurality of through-holes 8.

As described above, the panel manufacturing devices 10, 70, 80, and 90, the panel manufacturing method, and the panel 1 described in the embodiments are grasped as follows, for example.

Panel manufacturing devices 10, 70, 80, and 90 according to a first aspect include a transfer part 51 that transfers, in a transfer direction, a panel 1a having a core member 5 that includes a thermoplastic resin and is formed in a corrugated shape and a first faceplate 6 that includes a thermoplastic resin, is formed in a plate shape, and is joined to a surface on one side of the core member 5, a supply part 52 that supplies, toward a surface on the other side of the core member 5, a second faceplate 7 that includes a thermoplastic resin and is formed in a plate shape, and a joining part 53 that joins the core member 5 and the second faceplate 7 to form a joined part (welding part 9), in which the first faceplate 6 has a plurality of through-holes 8 formed through the first faceplate 6 for access to the core member 5, and the joining part 53 forms the joined part via the through-hole 8 of the first faceplate 6.

With the above configuration, since the core member 5 can be accessed through the through-hole 8, it is possible to appropriately join the core member 5 of the panel 1a and the second faceplate 7. Therefore, it is possible to suitably manufacture the panel 1 composed of the two faceplates 6 and 7 and the core member 5.

In a second aspect, the joining part 53 has a pressurizing part 61 that pressurizes the joined part, and the pressurizing part 61 includes a pressurizing member (pressurizing rod 66) that is inserted into the through-hole 8 of the first faceplate 6 to pressurize the joined part from a side of the core member 5 toward a side of the second faceplate 7, and a receiving member (receiving roller 65) that is provided on a side opposite to the panel 1a across the second faceplate 7 to receive the pressurization of the pressurizing member.

With the above configuration, it is possible to appropriately sandwich and pressurize the core member 5 and the second faceplate 7 with the pressurizing rod 66 and the receiving roller 65.

In a third aspect, the joining part 53 further includes a heating part 62 that heats the joined part, and the heating part 62 is a vibration heating part that imparts vibration to the pressurizing member to heat the joined part.

With the above configuration, since the heating can be performed together with the pressurization, it is possible to efficiently perform the joining operation.

In a fourth aspect, the joining part 53 has heating parts 72 and 82 that heat the joined part, and the heating parts 72 and 82 are laser irradiation parts that emit a laser from a side of the core member 5 via the through-hole 8 of the first faceplate 6 to heat the joined part.

With the above configuration, since the core member 5 can be directly heated through the through-hole 8, it is possible to suitably perform the welding between the core member 5 and the second faceplate 7.

In a fifth aspect, the joining part 53 further includes a pressurizing part 61 that pressurizes the joined part, and the pressurizing part 61 sandwiches and pressurizes the panel 1a and the second faceplate 7.

With the above configuration, the panel 1a and the second faceplate 7 are sandwiched and pressurized by the pressurizing part 61, and thus it is possible to suitably join the panel 1a and the second faceplate 7.

In a sixth aspect, a shape detecting unit 85 that detects the corrugated shape of the core member 5 is further provided, in which the joining part 53 executes the joining of the joined part based on the corrugated shape of the core member 5 detected by the shape detecting unit 85.

With the above configuration, since the joining can be performed based on the corrugated shape of the core member 5 detected by the shape detecting unit 85, it is possible to join the panel 1a and the second faceplate 7 at an appropriate position.

In a seventh aspect, a hole processing part 84 that forms the plurality of through-holes 8 in the first faceplate 6 is further provided.

With the above configuration, since the hole processing part 84 forms the plurality of through-holes 8 in the first faceplate 6, there is no need to prepare the first faceplate 6 in which the through-holes 8 are formed in advance.

In an eighth aspect, a shape detecting unit 85 that detects the corrugated shape of the core member 5 is further provided, in which the hole processing part 84 executes hole processing in the first faceplate 6 based on the corrugated shape of the core member 5 detected by the shape detecting unit 85.

With the above configuration, since the hole processing can be performed based on the corrugated shape of the core member 5 detected by the shape detecting unit 85, it is possible to form the plurality of through-holes 8 at appropriate positions.

A panel manufacturing method according to a ninth aspect includes a step of transferring, in a transfer direction, a panel 1a having a core member 5 that includes a thermoplastic resin and is formed in a corrugated shape and a first faceplate 6 that includes a thermoplastic resin, is formed in a plate shape, and is joined to a surface on one side of the core member 5, a step of supplying, toward a surface on the other side of the core member 5, a second faceplate 7 that includes a thermoplastic resin and is formed in a plate shape, and a step of joining the core member 5 and the second faceplate 7 to form a joined part, in which the first faceplate 6 has a plurality of through-holes 8 formed through the first faceplate 6 for access to the core member 5, and the joined part is formed via the through-hole 8 of the first faceplate 6 in the step of forming the joined part.

With the above configuration, since the core member 5 can be accessed through the through-hole 8, it is possible to appropriately join the core member 5 of the panel 1a and the second faceplate 7. Therefore, it is possible to suitably manufacture the panel 1 composed of the two faceplates 6 and 7 and the core member 5.

A panel 1 according to a tenth aspect includes a core member 5 that includes a thermoplastic resin and is formed in a corrugated shape, a first faceplate 6 that includes a thermoplastic resin, is formed in a plate shape, and is joined to a surface on one side of the core member 5, and a second faceplate 7 that includes a thermoplastic resin, is formed in a plate shape, and is joined to a surface on the other side of the core member 5, in which the first faceplate 6 has a plurality of through-holes 8 formed through the first faceplate 6 for access to the core member 5, and the second faceplate 7 has a plurality of joined parts that are provided in correspondence with the plurality of through-holes 8 and are formed by the joining of the second faceplate 7 to the core member 5.

With the above configuration, it is possible to obtain the sandwich panel in which the two faceplates 6 and 7 and the core member 5 are suitably joined.

In an eleventh aspect, the plurality of through-holes are holes that add sound absorbing performance.

With the above configuration, it is possible to obtain the panel 1 having the sound absorbing performance.

In a twelfth aspect, the plurality of through-holes 8 make rigidity of the first faceplate 6 lower than rigidity of the second faceplate 7.

With the above configuration, the panel 1 can be easily deformed and processed.

### Reference Signs List

1: panel
1a: panel
5: core member
6: first faceplate
7: second faceplate
8: through-hole
9: welding part
10: panel manufacturing device
11: single facer
12: double facer
15: control device
51: transfer part
52: supply part
53: joining part
61: pressurizing part
62: heating part
65: receiving roller
66: pressurizing rod
67: rod drive unit
68: vibration imparting part
70: panel manufacturing device (second embodiment)
72: heating part
80: panel manufacturing device (third embodiment)
82: heating part
84: hole processing part
85: shape detecting unit
90: panel manufacturing device (fourth embodiment)

## Claims

1. A panel manufacturing device (10, 70, 80, 90) comprising:
a transfer part (51) that transfers, in a transfer direction, a panel (1) having a core member (5) that includes a thermoplastic resin and is formed in a corrugated shape and a first faceplate (6) that includes a thermoplastic resin, is formed in a plate shape, and is joined to a surface on one side of the core member (5);
a supply part (52) that supplies, toward a surface on the other side of the core member (5), a second faceplate (7) that includes a thermoplastic resin and is formed in a plate shape; and
a joining part (53) that joins the core member (5) and the second faceplate (7) to form a joined part, **characterized in that**
the first faceplate (6) has a plurality of through-holes (8) formed through the first faceplate (6) for access to the core member (5), and **in that**
the joining part (53) forms the joined part via the through-hole (8) of the first faceplate (6).

2. The panel manufacturing device (10, 70, 80, 90) according to claim 1,
wherein the joining part (53) has a pressurizing part that pressurizes the joined part (61), and
the pressurizing part (53) includes
a pressurizing member (66) that is inserted into the through-hole (8) of the first faceplate (6) to pressurize the joined part (53) from a side of the core member (5) toward a side of the second faceplate (7), and
a receiving member (63) that is provided on a side opposite to the panel (1) across the second faceplate (7) to receive the pressurization of the pressurizing member (66).

3. The panel manufacturing device (10, 70, 80, 90) according to claim 2,
wherein the joining part (53) further includes a heating part (62) that heats the joined part, and
the heating part (62) is a vibration heating part that imparts vibration to the pressurizing member (66) to heat the joined part.

4. The panel manufacturing device (10, 70, 80, 90) according to claim 1,
wherein the joining part (53) has a heating part (62) that heats the joined part, and
the heating part (62) is a laser irradiation part that emits a laser from a side of the core member (5) via the through-hole (8) of the first faceplate (6) to heat the joined part.

5. The panel manufacturing device (10, 70, 80, 90) according to claim 4,
wherein the joining part (53) further includes a pressurizing part (61) that pressurizes the joined part, and
the pressurizing part (61) sandwiches and pressurizes the panel (1) and the second faceplate (7).

6. The panel manufacturing device (10, 70, 80, 90) according to any one of claims 1 to 5, further comprising:
a shape detecting unit (85) that detects the corrugated shape of the core member (5),
wherein the joining part (53) executes the joining of the joined part based on the corrugated shape of the core member (5) detected by the shape detecting unit (85).

7. The panel manufacturing device (10, 70, 80, 90) according to any one of claims 1 to 6, further comprising:
a hole processing part (84) that forms the plurality of through-holes (8) in the first faceplate (6).

8. The panel manufacturing device (10, 70, 80, 90) according to claim 7, further comprising:
a shape detecting unit (85) that detects the corrugated shape of the core member (5),
wherein the hole processing part (84) executes hole processing in the first faceplate (6) based on the corrugated shape of the core member (5) detected by the shape detecting unit (85).

9. A panel manufacturing method comprising:
a step of transferring, in a transfer direction, a panel (1) having a core member (5) that includes a thermoplastic resin and is formed in a corrugated shape and a first faceplate (6) that includes a thermoplastic resin, is formed in a plate shape, and is joined to a surface on one side of the core member (5);
a step of supplying, toward a surface on the other side of the core member (5), a second faceplate (7) that includes a thermoplastic resin and is formed in a plate shape; and
a step of joining the core member (5) and the second faceplate (7) to form a joined part, **characterized in that**
the first faceplate (6) has a plurality of through-holes (8) formed through the first faceplate (6) for access to the core member (5), and **in that**
the step of forming the joined part includes forming the joined part via the through-hole (8) of the first faceplate (6).

10. A panel (1) comprising:
a core member (5) that includes a thermoplastic resin and is formed in a corrugated shape;
a first faceplate (6) that includes a thermoplastic resin, is formed in a plate shape, and is joined to a surface on one side of the core member (5); and
a second faceplate (7) that includes a thermoplastic resin, is formed in a plate shape, and is joined to a surface on the other side of the core member (5), **characterized in that**
the first faceplate (6) has a plurality of through-holes (8) formed through the first faceplate (6) for access to the core member (5), and **in that**
the second faceplate (7) has a plurality of joined parts that are provided in correspondence with the plurality of through-holes and are formed by the joining of the second faceplate (7) to the core member (5).

11. The panel (1) according to claim 10,
wherein the plurality of through-holes (8) are holes that add sound absorbing performance.

12. The panel (1) according to claim 10 or 11,
wherein the plurality of through-holes (8) make rigidity of the first faceplate (6) lower than rigidity of the second faceplate (7).

## Patentansprüche

1. Paneelfertigungseinrichtung (10, 70, 80, 90), die Folgendes aufweist:
ein Übergabeteil (51), das in einer Übergaberichtung ein Paneel (1) mit einem Kernelement (5), das ein thermoplastisches Harz aufweist und in einer gewellten Form ausgebildet ist, und eine erste Flächenplatte (6), die ein thermoplastisches Harz aufweist, in einer Plattenform ausgebildet ist und mit einer Oberfläche auf einer Seite des Kernelements (5) verbunden ist, übergibt;
ein Zuführteil (52), das zu einer Oberfläche auf der anderen Seite des Kernelements (5) eine zweite Flächenplatte (7) zuführt, die ein thermoplastisches Harz aufweist und in einer Plattenform ausgebildet ist; und
ein Verbindungsteil (53), welches das Kernelement (5) und die zweite Flächenplatte (7) miteinander verbindet, um ein verbundenes Teil auszubilden, **dadurch gekennzeichnet, dass**
die erste Flächenplatte (6) eine Vielzahl von Durchgangsöffnungen (8) aufweist, die durch die erste Flächenplatte (6) für den Zugang zum Kernelement (5) ausgebildet sind, und dass
das Verbindungsteil (53) das verbundene Teil über die Durchgangsöffnung (8) der ersten Flächenplatte (6) ausbildet.

2. Paneelfertigungseinrichtung (10, 70, 80, 90) nach Anspruch 1,
wobei das Verbindungsteil (53) ein Druckerzeugungsteil aufweist, welches das verbundene Teil (61) unter Druck setzt, und
das Druckerzeugungsteil (53) Folgendes aufweist:
ein Druckerzeugungselement (66), das in die Durchgangsöffnung (8) der ersten Flächenplatte (6) eingeführt wird, um das verbundene Teil (53) von einer Seite des Kernelements (5) zu einer Seite der zweiten Flächenplatte (7) hin unter Druck zu setzen, und
ein Aufnahmeelement (63), das auf einer dem Paneel (1) gegenüberliegenden Seite über der zweiten Flächenplatte (7) vorgesehen ist, um den Druck des Druckerzeugungselements (66) aufzunehmen.

3. Paneelfertigungseinrichtung (10, 70, 80, 90) nach Anspruch 2,
wobei das Verbindungsteil (53) ferner ein Heizteil (62) aufweist, das das verbundene Teil erwärmt, und
d as Heizteil (62) ein Schwingungsverleihungsteil ist, das dem Druckerzeugungselement (66) Schwingungen verleiht, um das verbundene Teil zu erwärmen.

4. Paneelfertigungseinrichtung (10, 70, 80, 90) nach Anspruch 1,
wobei das Verbindungsteil (53) ein Heizteil (62) aufweist, das das verbundene Teil erwärmt, und
das Heizteil (62) ein Laserbestrahlungsteil ist, das einen Laser von einer Seite des Kernelements (5) über die Durchgangsöffnung (8) der ersten Flächenplatte (6) emittiert, um das verbundene Teil zu erwärmen.

5. Paneelfertigungseinrichtung (10, 70, 80, 90) nach Anspruch 4,
wobei das Verbindungsteil (53) ferner ein Druckerzeugungsteil (61) aufweist, das Druck auf das verbundene Teil ausübt, und
der Druckerzeugungsteil (61) das Paneel (1) und die zweite Flächenplatte (7) sandwichartig aufnimmt und unter Druck setzt.

6. Paneelfertigungseinrichtung (10, 70, 80, 90) nach einem der Ansprüche 1 bis 5, ferner aufweisend:
eine Formerfassungseinheit (85), die die gewellte Form des Kernelements (5) erfasst,
wobei das Verbindungsteil (53) das Verbinden des verbundenen Teils basierend auf der von der Formerfassungseinheit (85) erfassten gewellten Form des Kernelements (5) ausführt.

7. Paneelfertigungseinrichtung (10, 70, 80, 90) nach einem der Ansprüche 1 bis 6, ferner aufweisend:
ein Öffnungsbearbeitungsteil (84), das die Vielzahl der Durchgangsöffnungen (8) in der ersten Flächenplatte (6) ausbildet.

8. Paneelfertigungseinrichtung (10, 70, 80, 90) nach Anspruch 7, ferner aufweisend:
eine Formerfassungseinheit (85), die die gewellte Form des Kernelements (5) erfasst,
wobei der Öffnungsbearbeitungsteil (84) eine Öffnungsbearbeitung in der ersten Flächenplatte (6) basierend auf der von der Formerfassungseinheit (85) erfassten gewellten Form des Kernelements (5) ausführt.

9. Paneelfertigungsverfahren, das Folgendes aufweist:
einen Schritt des Übergebens eines Paneels (1) mit einem Kernelement (5), das ein thermoplastisches Harz aufweist und in einer gewellten Form ausgebildet ist, und einer ersten Flächenplatte (6), die ein thermoplastisches Harz aufweist, in einer Plattenform ausgebildet ist und mit einer Oberfläche auf einer Seite des Kernelements (5) verbunden ist, in eine Übergaberichtung;
einen Schritt des Zuführens einer zweiten Flächenplatte (7), die ein thermoplastisches Harz aufweist und in einer Plattenform ausgebildet ist, zu einer Oberfläche auf der anderen Seite des Kernelements (5); und
einen Schritt des Verbindens des Kernelements (5) und der zweiten Flächenplatte (7), um ein verbundenes Teil auszubilden, **dadurch gekennzeichnet, dass**
die erste Flächenplatte (6) eine Vielzahl von Durchgangsöffnungen (8) aufweist, die durch die erste Flächenplatte (6) für den Zugang zum Kernelement (5) ausgebildet sind, und dass
der Schritt des Ausbildens des verbundenen Teils das Ausbilden des verbundenen Teils über die Durchgangsöffnung (8) der ersten Flächenplatte (6) aufweist.

10. Paneel (1), das Folgendes aufweist:
ein Kernelement (5), das ein thermoplastisches Harz aufweist und in einer gewellten Form ausgebildet ist;
eine erste Flächenplatte (6), die ein thermoplastisches Harz aufweist, in einer Plattenform ausgebildet ist und mit einer Oberfläche auf einer Seite des Kernelements (5) verbunden ist; und
eine zweite Flächenplatte (7), die ein thermoplastisches Harz aufweist, in einer Plattenform ausgebildet ist und mit einer Oberfläche auf der anderen Seite des Kernelements (5) verbunden ist, **dadurch gekennzeichnet, dass**
die erste Flächenplatte (6) eine Vielzahl von Durchgangsöffnungen (8) aufweist, die durch die erste Flächenplatte (6) für den Zugang zum Kernelement (5) ausgebildet sind, und dass
die zweite Flächenplatte (7) eine Vielzahl von verbundenen Teilen aufweist, die in Übereinstimmung mit der Vielzahl von Durchgangsöffnungen vorgesehen sind und durch das Verbinden der zweiten Flächenplatte (7) mit dem Kernelement (5) ausgebildet sind.

11. Paneel (1) nach Anspruch 10,
wobei die Vielzahl von Durchgangsöffnungen (8) Öffnungen sind, die schallabsorbierende Leistung hinzufügen.

12. Paneel (1) nach Anspruch 10 oder 11,
wobei die Vielzahl der Durchgangsöffnungen (8) die Steifigkeit der ersten Flächenplatte (6) geringer macht als die Steifigkeit der zweiten Flächenplatte (7).

## Revendications

1. Dispositif (10, 70, 80, 90) de fabrication de panneau comprenant :
une partie de transfert (51) qui transfère, dans une direction de transfert, un panneau (1) présentant un élément central (5) qui inclut une résine thermoplastique et est formé sous une forme ondulée et une première plaque frontale (6) qui inclut une résine thermoplastique, est formée sous une forme de plaque, et est jointe à une surface sur un côté de l'élément central (5) ;
une partie d'alimentation (52) qui fournit, vers une surface sur l'autre côté de l'élément central (5), une deuxième plaque frontale (7) qui inclut une résine thermoplastique et est formée sous une forme de plaque ; et
une partie de jonction (53) qui joint l'élément central (5) et la deuxième plaque frontale (7) pour former une partie jointe, **caractérisé en ce que**
la première plaque frontale (6) présente une pluralité de trous traversants (8) formés à travers la première plaque frontale (6) pour l'accès à l'élément central (5), et **en ce que**
la partie de jonction (53) forme la partie jointe par l'intermédiaire du trou traversant (8) de la première plaque frontale (6).

2. Dispositif (10, 70, 80, 90) de fabrication de panneau selon la revendication 1,
dans lequel la partie de jonction (53) présente une partie de mise sous pression qui met sous pression la partie jointe (61), et
la partie de mise sous pression (53) inclut
un élément de mise sous pression (66) qui est inséré dans le trou traversant (8) de la première plaque frontale (6) pour mettre sous pression la partie jointe (53) depuis un côté de l'élément central (5) vers un côté de la deuxième plaque frontale (7), et
un élément de réception (63) qui est prévu sur un côté opposé au panneau (1) à travers la deuxième plaque frontale (7) pour recevoir la mise sous pression de l'élément de mise sous pression (66).

3. Dispositif (10, 70, 80, 90) de fabrication de panneau selon la revendication 2,
dans lequel la partie de jonction (53) inclut en outre une partie de chauffage (62) qui chauffe la partie jointe, et
la partie de chauffage (62) est une partie de chauffage par vibration qui transmet une vibration à l'élément de mise sous pression (66) pour chauffer la partie jointe.

4. Dispositif (10, 70, 80, 90) de fabrication de panneau selon la revendication 1,
dans lequel la partie de jonction (53) présente une partie de chauffage (62) qui chauffe la partie jointe, et
la partie de chauffage (62) est une partie d'irradiation laser qui émet un laser depuis un côté de l'élément central (5) par le biais du trou traversant (8) de la première plaque frontale (6) pour chauffer la partie jointe.

5. Dispositif (10, 70, 80, 90) de fabrication de panneau selon la revendication 4,
dans lequel la partie de jonction (53) inclut en outre une partie de mise sous pression (61) qui met sous pression la partie jointe, et
la partie de mise sous pression (61) prend en sandwich et met sous pression le panneau (1) et la deuxième plaque frontale (7).

6. Dispositif (10, 70, 80, 90) de fabrication de panneau selon l'une quelconque des revendications 1 à 5, comprenant en outre :
une unité (85) de détection de forme qui détecte la forme ondulée de l'élément central (5),
dans lequel la partie de jonction (53) exécute la jonction de la partie jointe sur la base de la forme ondulée de l'élément central (5) détectée par l'unité (85) de détection de forme.

7. Dispositif (10, 70, 80, 90) de fabrication de panneau selon l'une quelconque des revendications 1 à 6, comprenant en outre :
une partie de traitement de trous (84) qui forme la pluralité de trous traversants (8) dans la première plaque frontale (6).

8. Dispositif (10, 70, 80, 90) de fabrication de panneau selon la revendication 7, comprenant en outre :
une unité (85) de détection de forme qui détecte la forme ondulée de l'élément central (5),
dans lequel la partie de traitement de trous (84) exécute un traitement de trous dans la première plaque frontale (6) sur la base de la forme ondulée de l'élément central (5) détectée par l'unité (85) de détection de forme.

9. Procédé de fabrication de panneau comprenant :
une étape de transfert, dans une direction de transfert, d'un panneau (1) présentant un élément central (5) qui inclut une résine thermoplastique et est formé sous une forme ondulée et d'une première plaque frontale (6) qui inclut une résine thermoplastique, est formée sous une forme de plaque, et est jointe à une surface sur un côté de l'élément central (5) ;
une étape de fourniture, vers une surface sur l'autre côté de l'élément central (5), d'une deuxième plaque frontale (7) qui inclut une résine thermoplastique et est formée sous une forme de plaque ; et
une étape de jonction de l'élément central (5) et de la deuxième plaque frontale (7) pour former une partie jointe, **caractérisé en ce que**
la première plaque frontale (6) présente une pluralité de trous traversants (8) formés à travers la première plaque frontale (6) pour l'accès à l'élément central (5), et **en ce que**
l'étape de formation de la partie jointe inclut la formation de la partie jointe par l'intermédiaire du trou traversant (8) de la première plaque frontale (6).

10. Panneau (1) comprenant :
un élément central (5) qui inclut une résine thermoplastique et est formé sous une forme ondulée ;
une première plaque frontale (6) qui inclut une résine thermoplastique, est formée sous une forme de plaque, et est jointe à une surface sur un côté de l'élément central (5) ; et
une deuxième plaque frontale (7) qui inclut une résine thermoplastique, est formée sous une forme de plaque, et est jointe à une surface sur l'autre côté de l'élément central (5), **caractérisé en ce que**
la première plaque frontale (6) présente une pluralité de trous traversants (8) formés à travers la première plaque frontale (6) pour l'accès à l'élément central (5), et **en ce que**
la deuxième plaque frontale (7) présente une pluralité de parties jointes qui sont prévues en correspondance avec la pluralité de trous traversants et sont formées par la jonction de la deuxième plaque frontale (7) à l'élément central (5).

11. Panneau (1) selon la revendication 10,
dans lequel la pluralité de trous traversants (8) sont des trous qui ajoutent une performance d'absorption acoustique.

12. Panneau (1) selon la revendication 10 ou la revendication 11,
dans lequel la pluralité de trous traversants (8) rend la rigidité de la première plaque frontale (6) inférieure à la rigidité de la deuxième plaque frontale (7).
